# EUROPÄISCHE PATENTANMELDUNG

(11) **EP 4 663 677 A1**
(43) Veröffentlichungstag der Anmeldung: **17.12.2025**
(21) Anmeldenummer: 24182133.9
(22) Anmeldetag: 13.06.2024
(51) Int. Cl.: C08G 18/67, C08G 18/73, C08G 18/86

(54) **VERFAHREN ZUR HERSTELLUNG EINES POLYURETHAN-BASIERTEN ELASTOMERS**

(71) Anmelder: Covestro Deutschland AG, 51373 Leverkusen (DE)
(72) Erfinder: Norwig, Jochen, 51375 Leverkusen (DE); Geisler, Harald, 30629 Hannover (DE); Körner, Georg, 31319 Sehnde (DE)
(74) Vertreter: Levpat

(57) **Zusammenfassung**

Die vorliegende Erfindung beschreibt ein Verfahren zur Herstellung eines Polyurethan-basierten Elastomers umfassend des Bereitstellens eines Polyurethan-basierten Elastomers (1), optional der mechanischen Zerkleinerung des Polyurethan-basierten Elastomers (1) unter Erhalt einer Zwischenstufe (2) und der thermische Behandlung des Polyurethan-basierten Elastomers (1) nach Schritt a) oder der Zwischenstufe (2) nach Schritt b), wenn Schritt b) durchgeführt wird, , wobei die thermische Behandlung in Schritt c) bei einer Temperatur von 170°C bis 230 °C bevorzugt von 180°C bis 215°C erfolgt. Sie betrifft weiterhin durch ein solches Verfahren erhältliches Polyurethan-basierten Elastomers.

## Beschreibung

Die vorliegende Erfindung beschreibt ein Verfahren zur Herstellung eines Polyurethan-basierten Elastomers umfassend das Bereitstellen eines Polyurethan-basierten Elastomers (1), optional die mechanische Zerkleinerung des Polyurethan-basierten Elastomers (1) unter Erhalt einer Zwischenstufe (2) und die thermische Behandlung des Polyurethan-basierten Elastomers (1) nach Schritt a) oder der Zwischenstufe (2) nach Schritt b), wenn Schritt b) durchgeführt wird, wobei die thermische Behandlung in Schritt c) bei einer Temperatur von 170 °C bis 230 ° erfolgt. Sie betrifft weiterhin durch ein solches Verfahren erhältliches Polyurethan-basiertes Elastomer.

Polyurethan-Elastomere wurden vor über 60 Jahren basierend auf 1,5-Naphthalindiisocyanat (NDI; z.B. Desmodur^{®} 15 der Fa. Covestro AG), einem langkettigen Polyesterpolyol und einem kurzkettigen Alkandiol unter dem Handelsnamen Vulkollan^{®} der Fa. CovestroAG kommerzialisiert. Vulkollane^{®} zeichnen sich hierbei dadurch aus, dass sie neben exzellenten mechanisch-dynamischen Eigenschaften auch hervorragend bezüglich des Dauergebrauchsverhaltens verglichen mit vielen anderen Werkstoffen abschneiden. Auch das Quellungsverhalten in vielen organischen Lösungsmitteln liegt auf einem bemerkenswert günstigen Niveau.

Es ist wünschenswert, die Wiederverwendung von Elastomeren, bevorzugt Polyurethan-Elastomeren, in einem möglichst einfachen Verfahren zu ermöglichen. Hierbei soll möglichst auf die Zugabe weiterer Zusatzstoffe bei der (Wiederherstellung verzichtet werden, wobei die recyclierten Elastomere möglichst vergleichbare mechanische Eigenschaften aufweisen sollen.

Erfindungsgemäß gelöst wurde die Aufgabe durch ein Verfahren zur Herstellung eines Polyurethan-basierten Elastomers umfassend:
a) Bereitstellen eines Polyurethan-basierten Elastomers (1)
b) Optional mechanische Zerkleinerung des Polyurethan-basierten Elastomers (1) unter Erhalt einer Zwischenstufe (2)
c) Thermische Behandlung des Polyurethan-basierten Elastomers (1) nach Schritt a) oder der Zwischenstufe (2) nach Schritt b), wenn Schritt b) durchgeführt wird, wobei die thermische Behandlung in Schritt c) bei einer Temperatur von 170°C bis 230 °C bevorzugt von 180°C bis 215°C erfolgt.

Erfindungsgemäß ist das Polyurethan-basierten Elastomer nach Schritt c) strukturell unterschiedlich oder identisch, bevorzugt unterschiedlich zum Polyurethan-basierten Elastomer (1) aus Schritt a).

### Schritt a)

Erfindungsgemäß wird in Schritt a) das Polyurethan-basierte Elastomer (1) bereitgestellt.

### Polyurethan-basiertes Elastomer (1)

In einer Ausführungsform des erfindungsgemäßen Verfahrens ist das Polyurethan-basierte Elastomer (1) ein vernetztes Polyurethan-Elastomer.

### Vernetztes Polyurethan-Elastomer

In einer Ausführungsform des erfindungsgemäßen Verfahrens ist das Polyurethan-basierte Elastomer (1) ein vernetztes Polyurethan-Elastomer. Das vernetzte Polyurethan-Elastomer (1) ist erhältlich durch Vernetzung eines C-C Mehrfachbindung-enthaltenden Polyurethans mit einem Vernetzungsmittel optional unter Verwendung von weiteren Zusatzstoffen wie beispielsweise eines Füllstoffs.

In einer zweiten, alternativen, weniger bevorzugten Ausführungsform des erfindungsgemäßen Verfahrens ist das Polyurethan-basierte Elastomer (1) ein vernetztes Polyurethan-Elastomer und das vernetzte Polyurethan-Elastomer ist erhältlich durch Umsetzung eines C-C Mehrfachbindung-enthaltenden Polyoxyalkylenpolyols mit einem Polyisocyanat und einem Vernetzungsmittel optional in Gegenwart eines oder mehrerer weiterer Zusatzstoffe wie beispielsweise Füllstoffen und/oder eines Katalysators.

In einer dritten, weniger bevorzugten alternativen Ausführungsform des erfindungsgemäßen Verfahrens ist das Polyurethan-basierte Elastomer (1) ein vernetztes Polyurethan-Elastomer, und das vernetzte Polyurethan-Elastomer ist erhältlich durch Umsetzung eines Polyoxyalkylenpolyols einer Funktionalität von größer oder gleich 2 mit einem Polyisocyanat mit einer Funktionalität von größer oder gleich 2, wobei mindestens die Funktionalität des Polyoxyalkylenpolyols oder des Polyisocyanats größer als zwei sein muss.

In einer vierten, weniger bevorzugten alternativen Ausführungsform des erfindungsgemäßen Verfahrens ist das Polyurethan-basierte Elastomer (1) ein vernetztes Polyurethan-Elastomer, und das vernetzte Polyurethan-Elastomer ist erhältlich durch Umsetzung eines Polyamins oder Polyolpolyamins, wobei mindestens eine primäre Aminogruppe enthalten sein muss, mit einem Polyisocyanat, dessen Funktionalität größer oder gleich 2 ist.

In einer fünften, weniger bevorzugten alternativen Ausführungsform des erfindungsgemäßen Verfahrens ist das Polyurethan-basierte Elastomer (1) ein vernetztes Polyurethan-Elastomer, und das vernetzte Polyurethan-Elastomer ist erhältlich durch mehr als eines der vorgenannten vier alternativen Verfahren, beispielsweise durch Mischen verschiedener Polyurethan-basierter Elastomere.

### C-C Mehrfachbindung-enthaltendes Polyurethan

In einer Ausführungsform des erfindungsgemäßen Verfahrens ist das C-C Mehrfachbindung-enthaltende Polyurethan, bevorzugt ein C-C Doppelbindung-enthaltendes Polyurethan, erhältlich durch Umsetzung eines C-C Mehrfachbindung-enthaltenden Polyoxyalkylenpolyols, bevorzugt ein C-C Doppelbindung-enthaltenden Polyoxyalkylenpolyol, mit einem Polyisocyanat, optional in Gegenwart eines oder mehrerer weiterer Zusatzstoffe wie ein Katalysator und/oder ein Flammschutzmittel.

### C-C Mehrfachbindung-enthaltendes Polyoxyalkylenpolyol

In einer Ausführungsform des erfindungsgemäßen Verfahrens ist das C-C Mehrfachbindung-enthaltende Polyoxyalkylenpolyol ein C-C Mehrfachbindung-enthaltendes Polyetherpolyol, ein C-C Mehrfachbindung-enthaltendes Polyesterpolyol, ein C-C Mehrfachbindung-enthaltendes Polyetheresterpolyol, ein C-C Mehrfachbindung-enthaltendes Polyethercarbonatpolyol, ein C-C Mehrfachbindung-enthaltendes Polyestercarbonatpolyol, ein C-C Mehrfachbindung-enthaltendes Polyetherestercarbonatpolyol, bevorzugt ein C-C Mehrfachbindung-enthaltendes Polyetherestercarbonatpolyol.

Bevorzugt ist die C-C Mehrfachbindung des Polyoxyalkylenpolyols eine C-C Doppelbindung Soweit nicht anders angezeigt bedeutet der Begriff "C-C Doppelbindung" im Kontext der vorliegenden Anmeldung eine Kohlenstoff-Kohlenstoff-Doppelbindung, welche nicht Bestandteil eines aromatischen Systems ist.

Im Rahmen des erfindungsgemäßen Verfahrens sind unter Polyoxyalkylenpolyolen auch Polyethercarbonatpolyole, Polyetherpolyestercarbonatpolyole und/oder Polycarbonatpolyole zu verstehen.

In einer Ausführungsform des erfindungsgemäßen Verfahrens ist das C-C Mehrfachbindung-enthaltende Polyoxyalkylenpolyol ein C-C Doppelbindung-enthaltendes Polyetherestercarbonatpolyol.

In einer Ausführungsform des erfindungsgemäßen Verfahrens weist das C-C Doppelbindung-enthaltende Polyetherestercarbonatpolyol einen berechneten Gehalt an Kohlenstoff-Kohlenstoff Doppelbindungen von 0,5 Gew.-% bis 17,0 Gew.-%, bevorzugt von 1,0 Gew.-% bis 6,0 Gew.-% auf. Der Gehalt an C-C Doppelbindungen im Polyetherestercarbonatpolyol ergibt sich für das C-C Doppelbindungen enthaltende Polyetherestercarbonatpolyol als der Quotient des angegebenen Doppelbindungsgehalts des eingesetzten Polyetherestercarbonatpolyols angegeben in C₂H₂ Äquivalenten pro Masse Gesamtmasse des Polyetherestercarbonatpolyols und ist in C₂H₂ Äquivalenten pro Masse Polyetherestercarbonatpolyol angegeben.

In einer Ausführungsform des erfindungsgemäßen Verfahrens weist das C-C Doppelbindungen enthaltende Polyetherestercarbonatpolyol einen CO₂ Anteil von 0,5 Gew.-% bis 50 Gew.-%, bevorzugt von 5 Gew.-% bis 25 Gew.-%, auf.

In einer weiteren Ausgestaltung des erfindungsgemäßen Verfahrens ist das C-C Doppelbindung-enthaltende Polyetherestercarbonatpolyol erhältlich durch Anlagerung eines Alkylenoxids, mindestens eines Kohlenstoff-Kohlenstoff Doppelbindungshaltigen Monomers und CO₂ an eine H-funktionelle Starterverbindung in Gegenwart eines Doppelmetallcyanidkatalysators.

In dem erfindungsgemäßen Verfahren können als Alkylenoxide Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, insbesondere Propylenoxid eingesetzt werden. Werden Ethylenoxid und Propylenoxid in Mischung eingesetzt, so beträgt das molare Verhältnis EO/PO 1:99 bis 99:1, bevorzugt 5:95 bis 50:50. Werden Ethylenoxid und/oder Propylenoxid in Mischung mit anderen ungesättigten Alkylenoxiden eingesetzt, eingesetzt, so beträgt ihr Anteil 1 bis 40 mol-%, bevorzugt 2 bis 20 mol-%.

Als Katalysator für die Herstellung der erfindungsgemäßen C-C Doppelbindung-enthaltenden Polyetherestercarbonatpolyole kann beispielsweise ein DMC-Katalysator (Doppel-Metall-Cyanid-Katalysator) eingesetzt werden. Es können zusätzlich oder alternativ auch andere Katalysatoren eingesetzt werden. Für die Copolymerisation von Alkylenoxiden und CO₂ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und CO₂ gibt zum Beispiel Chemical Communications 47(2011)141-163.

Es ist bevorzugt, dass der Katalysator ein DMC-Katalysator ist.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Für die Herstellung der erfindungsgemäßen C-C Doppelbindung-enthaltenden Polyetherestercarbonatpolyole wird weiterhin mindestens eine H-funktionelle Starterverbindung eingesetzt.

Als geeignete H-funktionelle Starterverbindungen (Starter) können Verbindungen mit für die Alkoxylierung aktiven H-Atomen eingesetzt werden. Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz können beispielsweise eine oder mehrere Verbindungen ausgewählt werden aus der Gruppe umfassend ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z.B. sogenannte Jeffamine^{®} von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF^{®} der BASF, wie z.B. PolyTHF^{®} 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Acclaim^{®}-, Arcol^{®}-, Baycoll^{®}-, Bayfill^{®}-, Bayflex^{®}-Baygal^{®}-, PET^{®}- und Polyether-Polyole der Covestro AG (wie z. B. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PFT^{®} 1004, Polyether^{®} S180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydro¬phthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Startersubstanzen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen^{®} C-Typen der CovestroAG verwendet werden, wie z.B. Desmophen^{®} C 1100 oder Desmophen^{®} C 2200.

In einer weiteren Ausführungsform der Erfindung können Polyethercarbonatpolyole und/oder Polyetherestercarbonatpolyole als H-funktionelle Startersubstanzen eingesetzt werden. Insbesondere können Polyetherestercarbonatpolyole eingesetzt werden. Diese als H-funktionelle Startersubstanzen eingesetzten Polyetherestercarbonatpolyole können hierzu in einem separaten Reaktionsschritt zuvor hergestellt werden.

Die H-funktionellen Startersubstanzen weisen im Allgemeinen eine OH-Funktionalität (d.h. Anzahl an für die Polymerisation aktiven H-Atomen pro Molekül) von größer als 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (I),

HO-(CH₂)ₓ-OH (I)

wobei x eine Zahl von 1 bis 20, bevorzugt eine gerade Zahl von 2 bis 20 ist. Beispiele für Alkohole gemäß Formel (VII) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylo¬propan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 4500 g/mol und insbesondere ein Molekulargewicht Mn im Bereich von 62 bis 3000 g/mol. Das erfindungsgemäß verwendete CO2 muss einen Reinheitsgrad von mindestens 80%, vorzugsweise von mindestens 95%, aufweisen, wobei der Anteil schwefelhaltiger Verunreinigungen, wie COS oder SO2 unter 1 Gew.-%, vorzugsweise unter 0,1 Gew.-%, liegen muss. Es wird vorzugsweise CO2 verwendet, das als Nebenprodukt bei der Ammoniakherstellung, der Ethylenoxidherstellung, durch die Wassergas-shift-Reaktion, bei Verbrennungsprozessen, vorzugsweise in Kraftwerken, oder beim Kalkbrennen anfällt. Gegebenenfalls müssen Reinigungsschritte folgen, bei denen insbesondere schwefelhaltige Verunreinigungen, aber auch Kohlenmonoxid entfernt werden. Inerte Gase, wie Stickstoff oder Argon dürfen bis zu einem Gehalt von unter 20%, vorzugsweise von unter 5%, enthalten sein. Besonders bevorzugt wird CO₂ verwendet, das als Nebenprodukt bei der Ammoniakherstellung anfällt oder durch Wassergas-shift-Reaktion hergestellt wird, da CO₂ aus diesen Quellen besonders niedrige Gehalte an schwefelhaltigen Verunreinigungen aufweisen.

In einer weiteren Ausgestaltung des Verfahrens wird das Kohlenstoff-Kohlenstoff Doppelbindungshaltige Monomer ausgewählt wird aus mindestens einem der Monomere aus einer oder mehrerer der Gruppen bestehend aus
(a) Allylglycidylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylester ungesättigter Fettsäuren wie besipeislweise Ölsäure, Linolsäure, Konjuenfettsäure, oder Linolensäure, teilweise epoxidierte Fette und Öle, wie teilweise epoxidiertes Sojaöl, Leinöl, Rapsöl, Palmöl oder Sonnenblumenöl, und/oder deren Mischungen.
(b) Alkylenoxid mit Doppelbindung der allgemeinen Formel (II) ist: 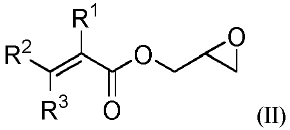 wobei R₁ bis R₃ unabhängig voneinander H, Halogen, substituierte oder nicht-substituierte C1-C22-Alkyl, substituierte oder nicht-substituierte C6-C12 Aryl sind. Die Verbindungen nach obiger Formel (IX) zeigen als bevorzugte Vertreter der Gruppe der Glycidylester α,β-ungesättigter Säuren ein Substitutionsmuster, welches sich in besonderer Weise zum Aufbau von Polyethercarbonatpolyolen mit ungesättigten Gruppen eignet. Diese Verbindungsklasse lässt sich mittels des erfindungsgemäß einsetzbaren DMC-Katalysators mit hohen Ausbeuten zu Polyethercarbonatpolyolen mit ungesättigten Gruppen umsetzten. Des Weiteren können sich durch die sterischen und elektronischen Voraussetzungen im Bereich der Doppelbindung, gute Möglichkeiten zur weiteren Umsetzung zu höhermolekularen, vernetzten Polyethercarbonatpolyolen ergeben.
(c) cyclisches Anhydrid der Formel (III), (IV) oder (V) entspricht: 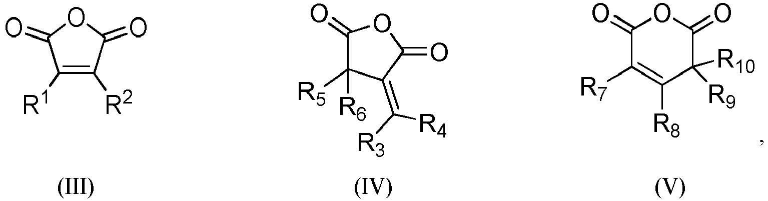 wobei R₁ bis R₁₀ unabhängig voneinander H, Halogen, substituierte oder nicht-substituierte C1-C22-Alkyl, substituierte oder nicht-substituierte C6-C12 Aryl sind. Bevorzugte Verbindungen der Formel (IX), (X) (XI) sind Maleinsäureanhydrid, Halogen- oder Alkylsubstituierte Maleinsäureanhydride und Itaconsäureanhydrid.
   und
(d) 4-Cyclohexen-1,2-disäureanhydrid, 4-Methyl-4-cyclohexen-1,2-disäureanhydrid, 5,6-Norbornen-2,3-disäureanhydrid, Allyl-5,6-norbomen-2,3-disäureanhydrid, Dodecenylbernsteinsäureanhydrid, Tetradecenylbernsteinsäureanhydrid, Hexadecenylbernsteinsäureanhydrid und Octadecenylbernsteinsäureanhydrid.

In einer weiteren Ausgestaltung des Verfahrens wird das Kohlenstoff-Kohlenstoff Doppelbindungshaltige Monomer ausgewählt aus mindestenes einem der Monomere aus einer oder mehrerer der Gruppen bestehend aus
(a) Allylglycidylether, Vinylcyclohexenoxid und Limonenoxid
(b) Glycidylacrylat und Glycidylmethacrylat,
(c) Maleinsäureanhydrid und Itaconsäureanhydrid
   und
(d) 4-Cyclohexen-1,2-disäureanhydrid und 5,6-Norbomen-2,3-disäureanhydrid.

In einer weiteren Ausführungsform des erfindungsgemäßen Verfahrens wird das Kohlenstoff-Kohlenstoff Doppelbindungshaltige Monomer ausgewählt aus Maleinsäureanhydrid und/oder Allylglycidylether, bevorzugt Maleinsäureanhydrid.

Das molare Verhältnis der eingesetzten gesättigten Alkylenoxide zu dem mindestens einen weiteren, Kohlenstoff-Kohlenstoff Doppelbindungshaltigen Monomer beträgt von 55,0 mol-% bis 99,5 mol-%, bevorzugt von 60,0 mol-% bis 99,0 mol-%.

Das mindestens eine weitere, Kohlenstoff-Kohlenstoff Doppelbindungshaltige Monomer kann statistisch oder blockweise in den Kohlenstoff-Kohlenstoff Doppelbindungen enthaltenden Polyethercarbonatpolyolen verteilt sein. Auch Gradientenpolymere sind einsetzbar.

Der Begriff Terpolymerisation im Sinne der Erfindung beinhaltet die Polymerisation von mindestens einem Alkylenoxid, mindestens einem weiteren Kohlenstoff-Kohlenstoff Doppelbindungshaltigen Monomer und CO₂. Terpolymerisation im Sinne der Erfindung schließt insbesondere auch die Copolymerisation von gesamt mehr als drei Monomeren mit ein.

Die erfindungsgemäß erhältlichen C-C Doppelbindungen enthaltenden Polyetherestercarbonatpolyole haben vorzugsweise eine durchschnittliche OH-Funktionalität (d.h. durchschnittliche Anzahl von OH-Gruppen pro Molekül) von mindestens 1, bevorzugt von 1,5 bis 10, besonders bevorzugt von 2,0 bis 4,0.

Das Molekulargewicht der C-C Doppelbindungen enthaltenden Polyetherestercarbonatpolyole beträgt bevorzugt mindestens 400 g/mol, besonders bevorzugt 400 bis 1'000'000 g/mol und höchst bevorzugt 500 bis 60'000 g/mol.

### Polyisocyanat

Geeignete Polyisocyanate sind die dem Fachmann an sich bekannten aromatischen, araliphatischen, aliphatischen oder cycloaliphatischen Polyisocyanate, welche auch Iminooxadiazindion-, Isocyanurat-, Uretdion-, Urethan-, Allophanat-, Biuret-, Harnstoff-, Oxadiazintrion, Oxazolidinon-, Acylharnstoff-, Carbamat- und/oder Carbodiimid-Strukturen aufweisen können. Diese können in B einzeln oder in beliebigen Mischungen untereinander eingesetzt werden.

Die vorstehend genannten Polyisocyanate basieren dabei auf dem Fachmann an sich bekannten Diisocyanaten oder Triisocyanaten oder höher funktionellen Isocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Diisocyanate oder Triisocyanate oder höher funktionellen Isocyanaten sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3-und 1,4-Diisocyanatocyclohexan, 1,3-und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Covestro AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate.

Bevorzugt weisen die Verbindungen der Isocyanatgruppen-haltige Verbindung (B-1) dabei einen Gehalt an Isocyanatgruppen von 2 Gew.-% bis 60 Gew.-%, bevorzugt von 15 Gew.-% bis 50 Gew.-%.

Besonders bevorzugt werden Polyisocyanate oder Polyisocyanatgemische der vorstehend genannten Art mit ausschließlich aliphatisch, cycloaliphatische und/oder aromatisch gebundenen Isocyanatgruppen eingesetzt.

Ganz besonders bevorzugt ist das Polyisocyanat eine oder mehrere Verbindungen und wird ausgewählt aus der Gruppe bestehend aus 1,6-Diisocyanatohexan (HDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), deren Trimerisierungs- oder höheren Oligomerisierungsprodukte und/oder deren Addukte.

Die erfindungsgemäßen Polyisocyanate haben vorzugsweise eine durchschnittliche NCO-Funktionalität (d.h. durchschnittliche Anzahl von NCO-Gruppen pro Molekül) von größer als 1, bevorzugt von 1,5 bis 10, besonders bevorzugt von ≥ 2,0 bis ≤ 4,0.

### Vernetzungsmittel

In einer Ausführungsform des erfindungsgemäßen Verfahrens wird als Vernetzungsmittel ein Radikalstarter verwendet, wobei unter Radikalstartern chemische Verbindungen zu verstehen sind, welche durch thermolytische oder photolytische Spaltung Initiatoren, bevorzugt Radikale bilden, welche die radikalische Reaktion, beispielsweise die Polymerisation oder Vernetzung, initialisieren. In einer bevorzugten Ausführungsform des erfindungsgemäßen Verfahrens wird ein Peroxid als Vernetzungsmittel verwendet. Hierunter sind nach der allgemeinen fachlichen Definition Verbindungen zu verstehen, die das Peroxidanion (O₂²⁻) oder eine Peroxygruppe (-O-O-) enthalten, wobei der Sauerstoff in diesen Verbindungen eine formale Oxidationszahl von minus eins hat.

Die Gruppe peroxidischer Verbindungen kann in anorganische und organische Peroxide unterteilt werden, wobei die anorganischen Peroxide oftmals salzartigen Charakter besitzen, die organischen Peroxide hingegen kovalent gebundene Peroxygruppen tragen. Die Sauerstoff-Sauerstoff-Bindung von Peroxiden ist labil und neigt zur homolytischen Spaltung unter Bildung reaktiver Radikale. Beispiele für anorganische Peroxide sind Wasserstoffperoxid, Peroxoborate, Peroxocarbonate, Peroxochlorate, Peroxodiphosphate, Peroxodiphosphorsäure, Peroxodischwefelsäure, Peroxodisulfate, Peroxodisulfuryldifluorid, Peroxohyponitrite, Peroxokohlensäure, Peroxonitrate, Peroxomolydate, Peroxomonophosphate, Peroxomonophosphorsäure, Peroxosalpetersäure, Peroxomonoschwefelsäure, Peroxomomosulfate, Peroxowolframate. Beispielhaft für organische Peroxide seien Perester und Hydroperoxid genannt.

In einer bevorzugten Ausführungsform des erfindungsgemäßen Verfahrens wird das mindestens eine Peroxid ausgewählt aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert.-Butylhydroperoxid, Di-(2-tert.-butyl-peroxyisopropyl)-benzen, tert.-Butylcumylperoxid, Di-tert.amylperoxid, Di-tert.-butylperoxid, Dicumylperoxid, 2,5-Dimethyl-2,5-di-(tert.-butylperoxy)-hexan, 1,1-Di-(tert.-butylperoxy)-3,3,5-trimethylcyclohexan, 1,1-Di-(tert.-butylperoxy)-cyclohexan, 2,5-Dimethyl-2,5-di(2-ethylhexanoylperoxy)-hexan, tert. -Butyl-peroxy-benzoat, tert. -Butylperoxy-3,5,5 - trimethylhexanoat, tert.-Butylperoxy-2-ethylhexanoat, tert.-Butylmonoperoxymaleat, Di-(4-tert.-butyl-cyclohexyl)-peroxydicarbonat, tert.-Butylperoxy-2-ethylhexylcarbonat, tert.-Butylperoxyisopropylcarbonat, 1,3 1,4-Bis(tert-butylperoxyisopropyl)benzene, t-Butyl Cumyl Peroxide, 2,5-Di(t-butylperoxy)-2,5-dimethylhexane, n-Butyl-4,4'-di(t-butylperoxy)valerate, 1,1'-Di-(tert-butylperoxy)-3,3,5-trimethylcyclohexan, Di-(2,4-dichlorobenzoyl)-peroxid, tert.-Butylperoxybenzoat, Butyl-4,4-di-(tert.-butylperoxy) valerat, 2,5-Dimethyl-2,5-di(tert.-butylperoxy)hexyn-3, 2,2'-Azodiisobutyronitril und Di-tert-Butylperoxid.

In einer besonders bevorzugten Ausführungsform des erfindungsgemäßen Verfahrens wird das mindestens eine Peroxid ausgewählt aus der Gruppe bestehend aus 1,1`-Di-(tert-butylperoxy)-3,3,5-trimethylcyclohexan, Di-tert-Butylperoxid, und tert.-Butylperoxybenzoat.

### Zusatzstoffe

In einer Ausführungsform des erfindungsgemäßen Verfahrens erfolgt die Vernetzung des C-C Mehrfachbindung-enthaltenden Polyurethans in Gegenwart weiterer Zusatzstoffe und die Zusatzstoffe enthalten Füllstoffe.

In einer alternativen Ausführungsform des erfindungsgemäßen Verfahrens erfolgt die Vernetzung des C-C Mehrfachbindung-enthaltenden Polyurethans in Gegenwart weiterer Zusatzstoffe und die Zusatzstoffe enthalten keine Füllstoffe (füllstofffrei).

### Katalysator

In einer Ausführungsform wird das C-C Mehrfachbindung-enthaltende Polyurethan, bevorzugt ein C-C Doppelbindung-enthaltende Polyurethan durch Umsetzung des C-C Mehrfachbindung-enthaltenden Polyoxyalkylenpolyols, bevorzugt des C-C Doppelbindung enthaltenden Polyetherestercarbonatpolyol, mit einem Polyisocyanat in Gegenwart eines Katalysators hergestellt. Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cyclo aliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff). Als Katalysatoren können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn(II)-Salz der 2-Ethylhexansäure (d.h. Zinn(II)-(2-ethylhexanoat)), das Zinn(II)-Salz der 2-Butyloctansäure, das Zinn(II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden. Selbstverständlich können alle genannten Katalysatoren auch als Gemische eingesetzt werden.

Als Katalysatoren können auch zinnfreie Organometallverbindungen verwendet werden. Beispiele hierfür die gemäß dem Stand der Technik bekannten und üblichen organischen Metallverbindungen wie Titanverbindungen, Eisenverbindungen, Zinkverbindungen oder Bismutverbindungen. Besonders bevorzugt als zinnfreie Organometallverbindungen können Hexansäure, 2-Ethyl-, Zinksalz, basisch (OMG Borchers GmbH, Langenfeld, Borchi KAT 22), Titaniumacetylacetonat (Tyzor AA 105), Titantetrabutanolat (Tyzor TBT), Bismut-2-ethylhexanoat (Borchi KAT 320) und und/oder win Gemisch aus Bismuth-2-ethylhexanoat und Zink-2-ethylhexanoat (Borchi KAT 0244) als Katalysatoren (D) eingesetzt werden. Selbstverständlich können alle genannten Katalysatoren (D) auch als Gemische eingesetzt werden.

Weitere Vertreter von zu verwendenden Katalysatoren sowie Einzelheiten über die Wirkungsweise der Katalysatoren sind im Vieweg und Höchtlen (Hrsg.): Kunststoff-Handbuch, Band VII, Carl-Hanser-Verlag, München 1966, S. 96 -102 sowie Henri Ulrich, "Chemistry and Technology of Isocyanates", John Wiley & Sons, Chichester, New York, Brisane, Toronto, Singapore, 1996, reprinted in 2001, Seiten 98ff. beschrieben.

Die Katalysatoren werden in der Regel in Mengen von etwa 0,001 bis 10 Gew.-%, bezogen auf die Gesamtmenge an Verbindungen mit mindestens zwei gegenüber Isocyanaten reaktionsfähigen Wasserstoffatomen enthaltend das erfindungsgemäße, C-C Mehrfachbindung-enthaltende Polyoxyalkylenpolyol eingesetzt.

### Füllstoffe

In einer Ausführungsform des erfindungsgemäßen Verfahrens werden die Füllstoffe gewählt aus den Materialien Ruß (Furnace Black, Channel Black, Thermal Black), Schichtsilikat, Kreide (CaCO3), Kalk (CaO), Talkum, Glasfasern, und/oder Glasmikroholkugeln sind.

In einer Ausführungsform des erfindungsgemäßen Verfahrens beträgt der berechnete Anteil an Füllstoffen von 10 Gew.- % bis 67 Gew.- %, bevorzugt von 15 Gew.- % bis 50 Gew.- % bezogen auf das Polyurethan-basierten Elastomers (1).

### Schritt b)

In einer Ausführungsform des erfindungsgemäßen Verfahrens erfolgt in Schritt b) die mechanische Zerkleinerung des Polyurethan-basierten Elastomers (1) unter Erhalt einer Zwischenstufe (2).

### Zwischenstufe (2)

In einer Ausführungsform des erfindungsgemäßen Verfahrens ist die Zwischenstufe (2) ein Granulat. In einer Ausführungsform des erfindungsgemäßen Verfahrens erfolgt die mechanische Zerkleinerung in Schritt b) unter Erhalt der Zwischenstufe (2), bevorzugt des Granulats mithilfe einer Schneidmühle, einer Prallmühle, eines Kneters oder eines Extruders, bevorzugt eines Extruders.

In einer Ausführungsform des erfindungsgemäßen Verfahrens wird Schritt b) bei einer Temperatur von bis zu 170°C durchgeführt.

In einer Ausführungsform des erfindungsgemäßen Verfahrens wird nach der mechanischen Zerkleinerung in Schritt b) und vor Schritt c) die Zwischenstufe (2) in eine geschlossene Form gegeben.

### Schritt c)

Erfindungsgemäß wird in Schritt c) das Polyurethan-basierten Elastomer (1) nach Schritt a) oder die Zwischenstufe (2) nach Schritt b), wenn Schritt b) durchgeführt wird, thermisch behandelt.

In einer Ausführungsform des erfindungsgemäßen Verfahrens erfolgt die die thermische Behandlung in Schritt c) bei einer Temperatur von 170 °C bis 230 °C, bevorzugt von 180 °C bis 215 °C.

In einer Ausführungsform des erfindungsgemäßen Verfahrens erfolgt die thermische Behandlung in Schritt c) einem Druck von 0,1 bara bis 1000 bara.

In einer Ausführungsform des erfindungsgemäßen Verfahrens erfolgt die thermische Behandlung in Schritt c) in einer Pressform, einer Presse, wobei auch ein Rheometer als Presse genutzt werden kann. In einer Ausführungsform des erfindungsgemäßen Verfahrens erfolgt die thermische Behandlung in Schritt c) bei einer Temperatur von 170 °C bis 230 °C, bevorzugt von 180 °C bis 215 ° für 5 Minuten bis zu 10 Stunden, bevorzugt für 10 Minuten bis zu 4 Stunden, besonders bevorzugt für 15 Minuten bis zu 2 Stunden.

In einer Ausführungsform des erfindungsgemäßen Verfahrens erfolgt die thermische Behandlung in Schritt c) ohne Zugabe weiterer Additive.

In einer alternativen Ausführungsform des erfindungsgemäßen Verfahrens erfolgt die thermische Behandlung in Schritt c) unter Zugabe weiterer Additive.

### Polyurethan-basiertes Elastomer

Ein weiterer Gegenstand der Erfindung ist ein polyurethan-basiertes Elastomer erhältlich nach dem erfindungsgemäßen Verfahren (Wiederverwendungsverfahren).

### Beispiele

Die vorliegende Erfindung wird anhand der nachfolgenden Beispiele näher beschrieben, ohne jedoch darauf beschränkt zu sein.

### Methoden

Die chemische Charakterisierung der eingesetzten Polyetherestercarbonatpolyole inklusive der Bestimmung des CO₂-Anteils sowie des Doppelbindungsgehalts erfolgte durch ¹H-NMR Spektroskopie in Analogie zur Methodenbeschreibung des Experimentalteils der WO 2018/069348 A1 auf Seite

Die OH-Zahl (Hydroxylzahl) wurde in Anlehnung an DIN 53240-2 bestimmt, wobei jedoch Pyridin anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Eq-Polyethercarbonatpolyol].

### Schritt a): Bereitstellen eines Polyurethan-basierten Elastomers (1)

### a-1) Herstellung des C-C Doppelbindung-enthaltenden Polyetherestercarbonatpolyols

Die Herstellung des C-C Doppelbindung-enthaltenden Polyetherestercarbonatpolyols erfolgte in Anlehnung an Beispiel A-1-1 auf Seite 46 bis 47 der WO 2018/069348 A1, wobei die Eigenschaften des C-C Doppelbindung-enthaltenden Polyetherestercarbonatpolyols wie CO2-Anteil, Doppelbindungsgehalt, zahlenmittleres Molekulargewicht, Polydispersitätsindex sowie die OH-Zahl und der per Karl-Fischer-Titration bestimmte Wassergehalt kurz vor Durchführen von Schritt a-2) in Tabelle 1 zusammengestellt sind.

**Tabelle 1: Eigenschaften des C-C Doppelbindung-enthaltenden Polyetherestercarbonatpolyols.**

| CO₂-Anteil [Gew.-%] | Doppelbindungsgehalt [Gew.-%] | Mn [g/mol] | PDI | OHZ [mg/g] | H₂O [Gew.-%] |
|---|---|---|---|---|---|
| 20,2 | 2,1 | 5700 | 1,4 | 27,4 | 0,06 |

### a-2) Herstellung des C-C Doppelbindung-enthaltenden Polyurethans

Das C-C Doppelbindung-enthaltende Polyurethan wurde kontinuierlich produziert in Anlehnung an Beispiele 1 bis 5 zur Herstellung von Thermoplastischem Polyurethan auf Seiten 10 und 11 der WO 2018/046699 A1.

Ein Strom einer Mischung des C-C Doppelbindung-enthaltenden Polyetherestercarbonatpolyols aus Schritt a-1) (Tabelle 1) mit 120 ppm Dibutylzinn dilaurat (DBTL) wurde auf 100°C erhitzt und in einem Statikmischer mit einem Strom aus Hexamethylendiisocyanat (HDI) (Covestro) zusammengeführt. Das molare Verhältnis von Isocyanatgruppen zu Hydroxylgruppen betrug dabei 1,07. Das reaktive Gemisch wurde bei durchschnittlich 130°C durch einen Planetwalzenextruder (Typ PWE 70; ENTEX Rust & Mitschke GmbH / Ausführungsform Polymaterials AG) geführt. Das Produkt wurde in beschichtete 20 Liter Kartons abgefüllt und für eine Stunde bei 130°C getempert. Auf diese Weise entstand Ballenware des C-C Doppelbindung enthaltenden Polyurethans.

***a-3) Herstellung des vernetzten Polyurethan-Elastomers***2608 g C-C Doppelbindung-enthaltendes Polyurethan aus Schritt a-2) wurden in einem 5 L Kneter (Werner & Pfleiderer, ineinandergreifender Laborinnenmischer, Model GK5E) bei 50 °C unter stetem Kneten (Rotordrehzahl 30 U/min)-vorgelegt. Nach und nach wurden die in Tabelle 2 aufgeführten Additive zugegeben und weiter geknetet, bis nach 6 min bei einer Temperatur von 95 °C eine kompakte, homogene Mischung entstanden war. Der Innenmischer wurde insgesamt zu 70% befüllt.

**Tabelle 2: Formulierung zur Herstellung des vernetztes Polyurethan-Elastomers**

| **Inhaltsstoff** | Anteil [phr] |
|---|---|
| PECU HUC-007-6 | 100,0 |
| Ruß N 772 | 70,0 |
| Weichmacher Mesamoll II | 10,0 |
| Zinkoxid Weißsiegel | 3,0 |
| Stearinsäure | 1,0 |
| Alterungsschutz Vulkanox HS/ TMQ | 1,0 |
| Verarbeitungshilfsmittel Struktol WB 222 | 1,0 |
| Alterungsschutz Vulkanox MB2 | 1,0 |
| Peroxid Perkadox BC 40 | 3,0 |

Die Formulierung wurde auf einem Walzwerk (Berstorff 250 x 500, 1 bis 25 U/min) zu einem ca. 3 mm dicken Fell ausgewalzt. Eine vulkametrische Untersuchung der Mischung ergab eine Vulkanisation/ Vernetzung nach Rheometerkurve bei 170°C, T90 lag bei 4,6 min. In einer Vulkanisationspresse (Rucks, Typ ES 234) wurde das Fell zu 2 mm dicken Platten (180 x 80 mm) mit einem Druck von 200 bar auf dem hydraulischen Zylinder verpresst und bei 170°C für 7 min zu einem Polyurethan-Elastomer vernetzt.

Zur Charakterisierung des Polyurethan-Elastomers wurden aus den Platten Prüfkörper nach ISO 37 vom Typ 2 ausgestanzt. Mit den Probekörpern wurden Zugdehnungs-Messungen durchgeführt und die Werte für Zugfestigkeit, Reißdehnung und Spannungswert bei 100 % Dehnung gemessen. Weiterhin wurden die Härte nach DIN ISO 48-4 sowie der Weiterreißwiderstand nach ISO 34-1 Verfahren A (Streifenprobe) gemessen.

**Tabelle 3: Mechanische Eigenschaften des vernetztes Polyurethan-Elastomers**

| **Mechanische Größe** | **Wert** |
|---|---|
| Härte [Shore A] | 67 |
| Spannungswert bei 100 % Dehnung [MPa] | 5,0 ± 0,1 |
| Zugfestigkeit [MPa] | 9,3 ± 0,2 |
| Reißdehnung [%] | 177 ± 11 |
| Weiterreißwiderstand [N/mm] | 3,0 ± 0,2 |

### Schritt b): Mechanische Zerkleinerung des Polyurethan-basierten Elastomers (1) unter Erhalt einer Zwischenstufe (2)

Das Plattenmaterial des vernetztes Polyurethan-Elastomers aus Schritt a) wurde mit einer Kautschukschere zu Quadern mit einer Kantenlänge von ca. 2 x 4 mm zerschnitten.

In einen Laborkneter Rheomix 3000, der auf 150°C vortemperiert war, wurden in drei Schritten nach und nach 342 g der Elastomerquader portioniert, während die ineinandergreifenden Wellen mit einer Drehzahl von 50/min rotierten. Auf diese Weise wurde ein Füllgrad von 75 % erreicht.

Der Stempel des Kneters saß nach Zugabe am Anschlag auf und arbeitete leicht in Abhängigkeit der Rotorbewegung (Fazit: der gewählte Füllgrad des Kneters passt zu der Gesamtmenge des Materials). Bis Ende des Knetvorgangs stieg die Temperatur auf 164 °C. Es wurde ein trockenes, krümeliges Granulat erhalten. Die Trennung des Granulats mit einem Sieb der Maschenweite 1mm ergab einen Anteil von ca. 1/3 der Gesamtmenge, der Rückstand, ca. 2/3 der Gesamtmenge, hatte eine uneinheitliche Korngröße von bis zu 3 mm.

### Schritt c): Thermische Behandlung der Zwischenstufe (2) nach Schritt b)

Eine Probe des nicht gesiebten Granulats der Zwischenstufe (2) nach Schritt b) wurde in ein Rheometer MDR 2000E eingefüllt. Hier wurden dem Granulat keinerlei Additive zugegeben.

Bei 180°C und einer Schließkraft des Zylinders von 11,5 kN wurde (ohne Zugabe von Vernetzungsmitteln) für 15 min das Drehmoment gemessen, das für eine oszillierende Bewegung der Rheometerplatte mit einer Amplitude von 0,5° ausgeübt wurde.

Das hohe Anfangsdrehmoment ohne Fließbereich von 11 dNm weist auf vulkanisiertes Material hin.

Bis zum Ende des Tempervorgangs nach in diesem Fall 15 min verändert sich das Drehmoment nicht signifikant.

Nach Beendigung der Temperns wurde ein kompakter, elastischer Probekörper des nach dem hier beschriebenen Verfahren wiederverwendeten Polyurethan-basierten Elastomers aus dem Rheometer erhalten. Dieser ließ sich beliebig von Hand biegen und ziehen, ohne dass Materialbrüche auftraten.

### c-ii) Herstellung einer Recyclat Probeplatte

Mit dem Materialanteil der Korngröße ≤ 1mm (feinteiliger Anteil) des Polyurethan-basierten Elastomers aus Schritt b) wurde in der Vulkanisationspresse (Rucks, Tpy ES 234) eine 2mm dicke Platte (70 x 70 mm) hergestellt. Sie wies elastische Eigenschaften auf: Im Zug-Dehnungsversuch wurde eine Reißfestigkeit von 1,2 MPa und eine Reißdehnung von 60 % erreicht.

## Patentansprüche

1. Verfahren zur Herstellung eines Polyurethan-basierten Elastomers umfassend:
a) Bereitstellen eines Polyurethan-basierten Elastomers (1)
b) Optional mechanische Zerkleinerung des Polyurethan-basierten Elastomers (1) unter Erhalt einer Zwischenstufe (2)
c) Thermische Behandlung des Polyurethan-basierten Elastomers (1) nach Schritt a) oder der Zwischenstufe (2) nach Schritt b), wenn Schritt b) durchgeführt wird,
wobei die thermische Behandlung in Schritt c) bei einer Temperatur von 170°C bis 230 °C bevorzugt von 180°C bis 215°C erfolgt.

2. Verfahren gemäß Anspruch 1, wobei das Polyurethan-basierte Elastomer (1) ein vernetztes Polyurethan-Elastomer ist.

3. Verfahren gemäß Anspruch 2, wobei das Polyurethan-basierte Elastomer (1) ein vernetztes Polyurethan-Elastomer ist und das vernetzte Polyurethan-Elastomer erhältlich ist durch Vernetzung eines C-C Mehrfachbindung-enthaltenden Polyurethans mit einem Vernetzungsmittel, optional unter Verwendung von weiteren Zusatzstoffen wie beispielsweise Füllstoffen.

4. Verfahren gemäß Anspruch 3, wobei das C-C Mehrfachbindung-enthaltende Polyurethan erhältlich ist durch Umsetzung eines C-C Mehrfachbindung-enthaltenden Polyoxyalkylenpolyols mit einem Polyisocyanat, optional in Gegenwart eines oder mehrerer weiterer Zusatzstoffe wie Katalysator, Flammschutz.

5. Verfahren gemäß Anspruch 4, wobei das C-C Mehrfachbindung-enthaltende Polyoxyalkylenpolyol ein C-C Mehrfachbindung-enthaltendes Polyetherpolyol, ein C-C Mehrfachbindung-enthaltendes Polyesterpolyol, ein C-C Mehrfachbindung-enthaltendes Polyetheresterpolyol, ein C-C Mehrfachbindung-enthaltendes Polyethercarbonatpolyol, ein C-C Mehrfachbindung-enthaltendes Polyestercarbonatpolyol, ein C-C Mehrfachbindung-enthaltendes Polyetherestercarbonatpolyol, bevorzugt ein C-C Mehrfachbindung-enthaltendes Polyetherestercarbonatpolyol ist.

6. Verfahren gemäß einem der Ansprüche 3 bis 5, wobei das Vernetzungsmittel ein Peroxid ist.

7. Verfahren gemäß einem der Ansprüche 3 bis 6, wobei die Vernetzung des C-C Mehrfachbindung-enthaltenden Polyurethans in Gegenwart weiterer Zusatzstoffe erfolgt und die Zusatzstoffe Füllstoffe enthalten.

8. Verfahren gemäß Anspruch 7, wobei die Füllstoffe Ruß, Schichtsilikat, Kreide, Kalk, Talkum, Glasfasern, und/oder Glasmikroholkugeln sind.

9. Verfahren gemäß Anspruch 7 oder 8, wobei der berechnete Anteil an Füllstoffen von 10 Gew.- % bis 67 Gew.- %, bevorzugt von 15 Gew.- % bis 50 Gew.- % bezogen auf das Polyurethan-basierte Elastomer (1) beträgt.

10. Verfahren gemäß einem der Ansprüche 1 bis 9, wobei in Schritt b) die mechanische Zerkleinerung des Polyurethan-basierten Elastomers (1) unter Erhalt einer Zwischenstufe (2) erfolgt.

11. Verfahren gemäß einem der Ansprüche 1 bis 10, wobei die Zwischenstufe (2) ein Granulat ist.

12. Verfahren gemäß einem der Ansprüche 1 bis 11, wobei die mechanische Zerkleinerung in Schritt b) unter Erhalt der Zwischenstufe (2), bevorzugt des Granulats, mithilfe einer Schneidmühle, einer Prallmühle, eines Kneters oder eines Extruders, bevorzugt eines Extruders erfolgt.

13. Verfahren gemäß einem der Ansprüche 1 bis 12, wobei die thermische Behandlung in Schritt c) bei einer Temperatur von 170°C bis 230°C erfolgt.

14. Verfahren gemäß einem der Ansprüche 1 bis 13, wobei die thermische Behandlung in Schritt c) ohne Zugabe weiterer Additive erfolgt.

15. Polyurethan-basiertes Elastomer erhältlich nach dem Verfahren gemäß einem der Ansprüche 1 bis 14.
